# EUROPEAN PATENT SPECIFICATION

(11) **EP 2 089 834 B1**
(45) Date of publication and mention of the grant of the patent: **02.01.2013**
(21) Application number: 07867570.9
(22) Date of filing: 27.11.2007
(51) Int. Cl.: G06K 19/06, B42D 15/10, G06K 7/08, G07F 7/08, G06Q 20/00, G06K 19/07, G07F 7/10

(54) **CARD WITH VARIABLE MAGNETIC STRIPE**
KARTE MIT VARIABLEM MAGNETSTREIFEN
CARTE POURVUE D'UNE BANDE MAGNÉTIQUE VARIABLE

(30) Priority: 29.11.2006 US 564375
(43) Date of publication of application: 19.08.2009
(73) Proprietor: Lucent Technologies Inc., Murray Hill, NJ 07974-0636 (US)
(72) Inventor: BRADY, Colin P., San Jose, CA 95120 (US); RAJAN, Govinda N., 1273 KR Huizen (NL)
(74) Representative: Wetzel, Emmanuelle
(86) International application number: PCT/US2007/024437
(87) International publication number: WO 2008/066806

(56) References cited:
- US-A- 4 701 601
- US-A- 4 868 376
- US-A- 5 955 961
- US-A- 6 012 636
- US-A1- 2002 043 566
- US-A1- 2004 034 782
- US-B2- 6 607 127

## Description

### BACKGROUND OF THE INVENTION

### Field of the invention

The invention relates generally to an article and method for conducting secure transactions, and more specifically, to a transaction card with self-programming capability for periodic update of stored data.

### Description of Related Art

Each year the world conducts over four trillion dollars in payment card transactions. For every hundred dollars spent six cents is lost to fraud, resulting in over two billion dollars in illegal charges that must be covered by banks and merchants each year. Attempts made to modernize and secure the credit network have largely failed, as they required upgrades to the payment card terminal network. As the installed base of terminals represents a $10 billion investment in the US alone, it is likely to be some time before a definitive answer to the magnetic strip terminal is widely adopted by the industry.

Although there are various measures used for ensuring payment card security, each approach has its own limitations. For example, smart cards, which require personal identification number (PIN) codes to validate transactions, are able to address only a small fraction of problems in fraudulent transactions, and also requires extensive upgrade from other existing card terminals.

The use of a card validation code is helpful with transactions in which the card is not physically present, such as those conducted over telephones or on the internet. However, once the card validation code is known by others, security is easily compromised not only because of potential fraudulent use over telephone or internet, but also because of counterfeit card.

Other security measures involving more sophisticated technologies are also available, but they may be difficult to integrate with the legacy magnetic strip reader network, or otherwise require costly network upgrades. Therefore, there is an ongoing need for alternatives in improved security measures, especially ones that are readily compatible with existing devices and network.

US 5,955,961 discloses a transaction card, which enables access to one of a plurality of different accounts.

US 2002/0043566 A1 discloses a transaction card and a method which are used for securing a transaction conduction by mean of a credit card to be read by a magnetic card reader. The card is provided with a counter which increments by 1 or any number each time the card is activated.

US 6,012,636 discloses a multiple application card data system comprising a data management device and a user card. The device enables transfer and storage of the data of one provider on the user card, making the user card an effective clone of that provider's data.

US 2004/0034782 A discloses a device to input a user-defined secret code to activate the card with magnetic film strip, integrated circuitry or the combination of the two and a method of activating the card.

### SUMMARY OF THE INVENTION

The invention is defined by claim 1 which is delimited against US 6,012,636. Preferred embodiments are set out in the dependent claims.

### BRIEF DESCRIPTION OF THE DRAWINGS

The teachings of the present invention can be readily understood by considering the following detailed description in conjunction with the accompanying drawings, in which:
Figure I depicts a back view of a conventional payment or transaction card with a magnetic stripe;
Figures 2A-2B depict a from view and a back view, respectively, of a transaction card according to one embodiment of the present invention;
Figure 3 depicts an electromagnetic coil connected to a power source for implementing one embodiment of the present invention;
Figure 4A depicts the alignment of magnetic dipoles or magnetic elements on a magnetic stripe;
Figure 4B depicts current signals from a read head corresponding to the encoded information of Figure 4A;
Figure 5A depicts an embodiment in which an even number of dipoles are arranged in the same direction to create a "1" data bit;
Figure 5B depicts the encoding of a "0" bit by an even number of dipoles; and
Figure 6 depicts the output signal of a card reader as a function of time or location at the self-programming region of the transaction card of the present invention.

To facilitate understanding, identical reference numerals have been used, where possible, to designate identical elements that are common to the figures.

### DETAILED DIESCRIPTION

The present invention relates to a transaction card having a self-programming region that allows periodic update of security data. The self-programming region contains one or more self-programming components, each of which can be switched between two states depending on the direction of an electrical current through the component. The self-programming components are used for updating a security code or card verification code (CVC) at various time intervals, e.g., as predetermined by an algorithm in a microprocessor on the card. A transaction can be validated only if the card is presented at the point of use, and if the time-dependent verification code matches that of a remote server belonging to the card issuer. The use of the dynamic or time-dependent code provides added security against counterfeit cards or other fraudulent uses associated with a conventional card. Another advantage of this transaction card is the backward compatibility with legacy magnetic stripe technology, which makes the card desirable for a variety of security applications, including building security.

In one embodiment, the self-programming region is operatively coupled to the magnetic stripe, and electromagnetic coils are used to encode data bits on the magnetic stripe. In an example serving for a better understanding, the electromagnetic coils serve as a magnetic stripe emulator by generating magnetic fields that can be read by magnetic stripe card readers. In another example serving for a better understanding, the self-programming components are one or more magnetic random access memory (MRAM) elements for storing the periodically updated code.

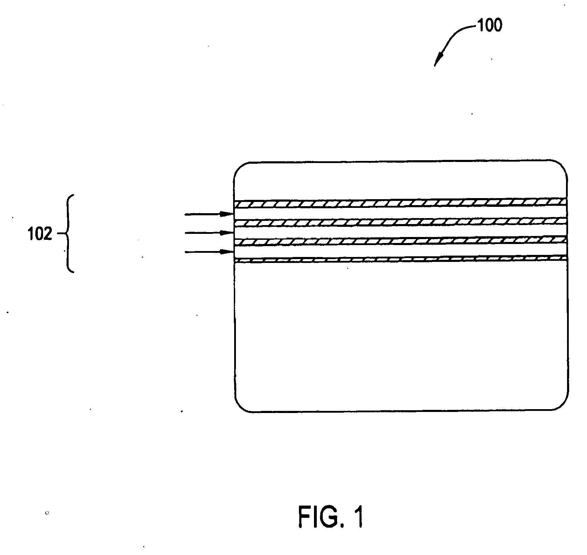

Figure 1 is a schematic illustration of a back view of a conventional payment or transaction card 100 with a magnetic stripe 102. The magnetic stripe 102 usually contains three tracks, each being 0.110 inches (2.79 mm) wide. There are various standards defining different aspects of a transaction card, including the physical properties as well as information storage. For example, under the ISO/IEC 7811 standards, Tracks 1 and 3 are recorded at 210 bits per inch (8.27 bits/mm) and Track 2 has a bit density of 75 bits per inch (2.95 bits/mm). Each track can either contain 7-bit alphanumeric characters, or 5-bit numeric characters. Both Track 1 and Track 2 are read-only tracks, and contain information such as card holder's name, card number, expiration date, among others. Track 3 is a read/write track that is not frequently used.

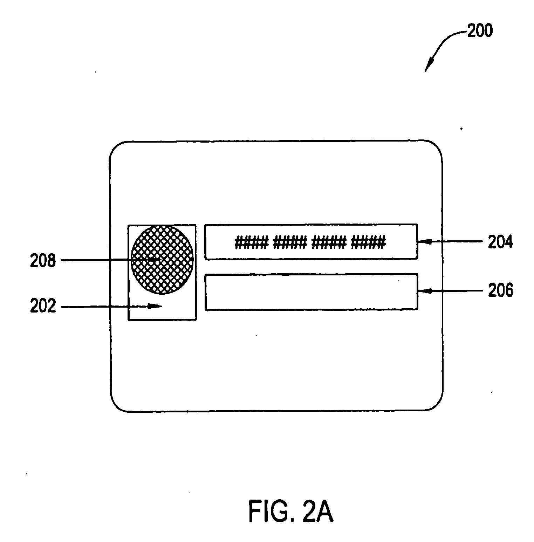

Figures 2A-2B are schematic illustrations of a front view and a back view, respectively, of a transaction card 200 according to one embodiment of the present invention. As shown in the front view of Figure 2A, the card 200 has a processor 202, in addition to a card number region 204 and a card holder name region 206. The processor 202 contains a time stamp for the current time information and a memory with an algorithm for computing the verification code at certain predetermined time intervals. The algorithm may be a pseudo-random number generator, and may also contain the current time as a parameter in the algorithm for computing the verification code. Alternatively, a separate memory containing the algorithm may be provided on the card 200 for access by the processor 202. An optional smart card interface 208 is also provided.

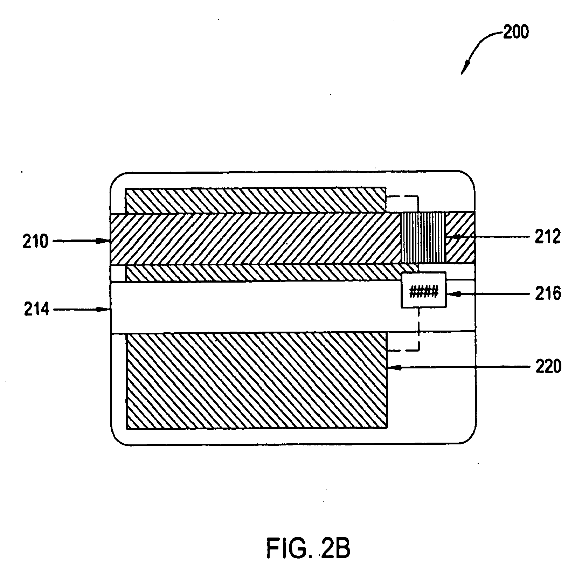

Figure 2B shows the backside of the card 200 comprising a magnetic stripe 210, a power source 220, and a self-programming region 212. The self-programming region 212 is connected to the power source 220, which is also connected to the embedded processor 202. The power source 220 provides power necessary for computing the card verification code and for updating the code on the self-programming region 212. In one embodiment, the power source 220 is a flexible thin battery. Long-life, flexible batteries are commercially available from a variety of manufacturers, e.g., Thin Battery Technologies, Inc., Power Paper, NEC and Solicore, among others. A signature region 214 and an optional digital display 216 are also provided. The digital display 216, if present, is also connected to the self-programming region 212 and the power source 220.

In one embodiment, the self-programming region 212 comprises a part of the magnetic stripe 210 and the encoding is done in accordance with existing standards on Track 1 or Track 2. This allows compatibility with existing card readers, such as legacy readers. For applications where compatibility is not required, the self-programming region 212 may be provided on Track 3, and can be encoded in a variety of suitable formats. A card verification code stored in the self-programming region 212 is periodically (or automatically) updated by components on the card 200 according to certain predetermined procedures.

The self-programming region 212 of the magnetic stripe 210 has one or more self-programming components. In one embodiment, one or more embedded electromagnetic coils are used to program the data bits on the magnetic stripe 210, with the security or verification code being stored on the magnetic stripe until the next update. In an example serving for a better understanding, the electromagnet coils are used in a magnetic stripe emulator mode, in which the magnetic fields generated by the coils are used to represent the data bits. In this case, the coils can be provided in appropriate locations in Track 1 or Track 2 of the magnetic stripe 210 to allow for compatibility with card readers, although they are not necessarily coupled to the magnetic stripe 210, since the coils are not used to align the magnetic elements of the magnetic stripe 210.

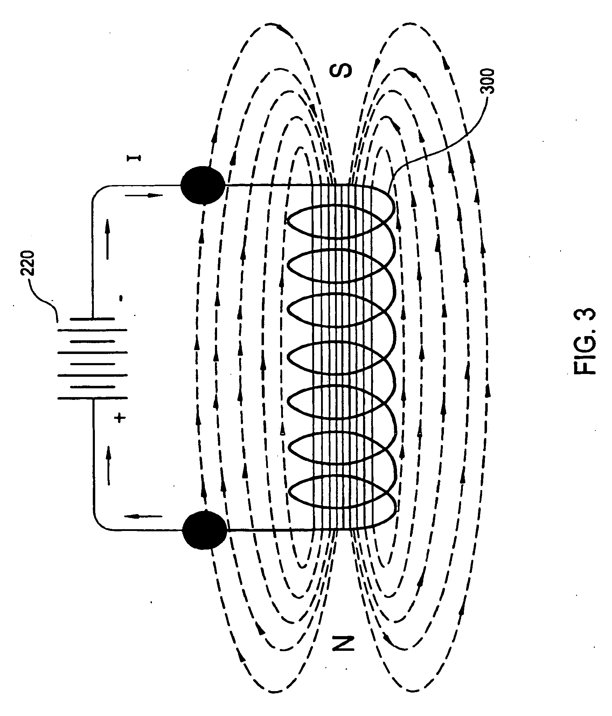

Figure 3 shows an electromagnetic coil 300 connected to the power source 220. When an electrical current is provided by the power source 220 to the coil 300, a magnetic field is created in a direction perpendicular to the current flow in the coil 300. The N and S polarities of the resulting magnetic field is illustrated for the electron flow direction I. Magnetic particles, e.g., ferric oxide or other suitable materials, on the magnetic stripe under the influence of coil 300 will be aligned along the field direction. When the electrical current is passed through the coil 300 in the opposite direction, the resultant magnetic field direction is reversed, thus reversing the alignment of the magnetic particles on the magnetic stripe.

In one embodiment, the electromagnetic coil 300 may be a thin film magnetic inductor such as that described by Korenivski and van Dover, "Thin-Film Magnetic Inductors for Integrated Circuit Applications", FP-12 Abstract, 7th Joint MMM-Intermag Conference, 6-9 January, 1998. Other thin film magnetic inductor designs are also suitable, including for example, Wang et al., U.S. patent 6,822,548, "Magnetic Thin Film Inductors", issued November 23, 2004; and Zhuang et al., "Study of Magnetic On-chip Inductors", Proc. SAFE 2001, Nov. 28-29, 2001, Veldhoven, the Netherlands, pp. 229-233. On the transaction card 200, the coils 300 are disposed in close proximity to the magnetic stripe material in the corresponding track of the self-programming region 212. In one embodiment, the coils are formed at locations on the track corresponding to the card verification code, with the magnetic stripe material being on the inside of the coils, i.e., forming the core. The fabrication of the coils 300 and integration with existing magnetic stripe can be done with techniques known to one skilled in the art and the dimensions and/or layout of each coil are designed to be compatible with encoding of typical magnetic stripe materials. The power source 220 and the coils 300 are designed to allow currents in two directions to be passed through each coil to generate a magnetic field sufficient for programming the data bits.

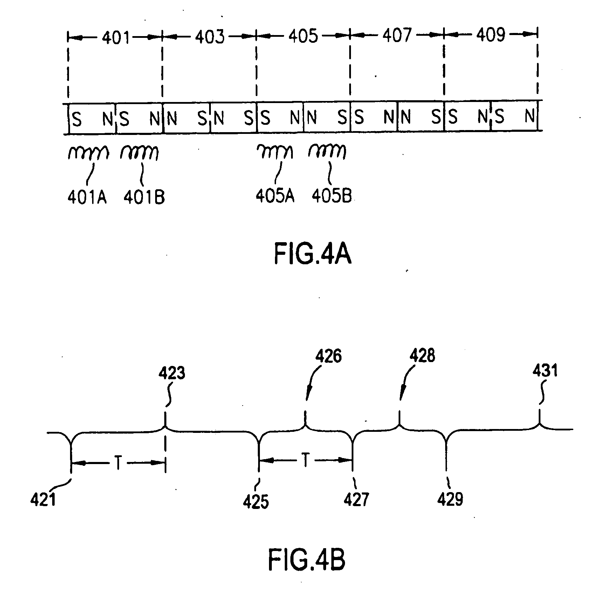

Figure 4A illustrates schematically the alignment of magnetic dipoles or magnetic elements (each may correspond to one or more magnetic particles) on a magnetic stripe representing various data bits "1" and "0" according to a commonly used scheme F2F or Aiken BiPhase under the ISO/IEC 7811 standards. Each "0" and "1" bit has the same physical length, and each comprises two magnetic dipoles. For the "0" bit, the two dipoles within the bit are aligned in the same directions, while for the "1" bit, the two dipoles are aligned in opposite directions. For example, bits 401, 403 and 409 are "0" bits, each having their respective magnetic dipoles aligned in the same direction, i.e., S-N/S-N or N-S/N-S. Bits 405 and 407 are "1" bits, and their respective dipoles are aligned in opposite directions, e.g., S-N/N-S or N-S/S-N. According to one embodiment of the present invention, each dipole has an associated electromagnetic coil that is configured for passing a current through the dipole in two possible directions for aligning the dipole in either N-S or S-N orientation. The dipoles for bits 401 and 405 are illustrated respectively as 401A, 401B and 405A, 405B in Figure 4A (others are omitted for the sake of clarity). The length of each coil 300 is designed to be similar to the typical physical length of a bit on existing Track 1 or Track 2. Adjacent coils can be arranged in close proximity to one another, e.g., abutting each other. Alternatively, each adjacent coil can also be spaced apart by a certain distance, if desired, with the distance being dependent on the magnetic field strength produced by the maximum current through the coils.

Under the F2F scheme, adjacent bits are always arranged to have the same polarity (N or S) abutting each other, resulting in a region of large concentration of magnetic flux lines between two bits. To initiate a read operation, the transaction card 200 is swiped through a card reader. The high flux regions of the magnetic stripe will induce a current in the read head, with opposite polarities of the flux lines resulting in currents in opposite directions. This is illustrated in Figure 4B, which shows the current signals from the read head corresponding to the encoded information of Figure 4A. The data bits are decoded based on the flux changes detected within each bit length or the elapsed time between flux transitions. Thus, a bit "0" is detected if the separation of adjacent flux transitions occur close to a bit period T, e.g., signals 421 and 423 for bit 401, 423 and 425 for bit 403, and signal 429 and 431 for bit 409. For data bit "1", there is an additional flux transition occurring in the middle of its bit length or near half a bit period, e.g., signal 426 around the middle of the period for bit 405, with signals 425 and 427 marking the beginning and the end of the bit 205. Clocking bits such as a string of "0" bits are also provided at the beginning and the end of a track for determining the bit period. Since most manual card swipes are done at a relatively constant speed, the bit period or bit length can be determined based on the signals generated from the clocking bits.

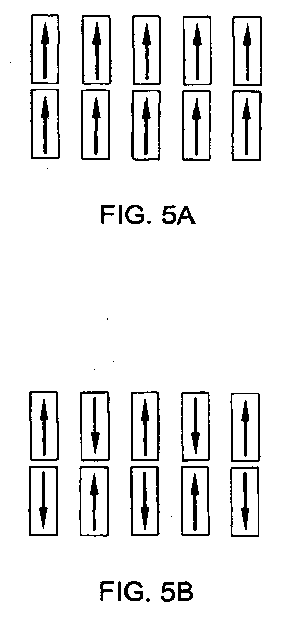

Aside from the scheme illustrated in Figure 4A, other variations can also be used to encode the data bits, as long as the resultant magnetic field lines can be detected by the card reader for proper reading of the respective bits. For example, Figure 5A illustrates an embodiment in which an even number of dipoles are arranged in the same direction to create a "1" data bit. Figure 5B shows the encoding of a "0" bit by an even number of dipoles, arranged such that half of the dipoles are aligned in one direction and the other half aligned in the opposite direction, resulting in an overall cancellation of the magnetic field.

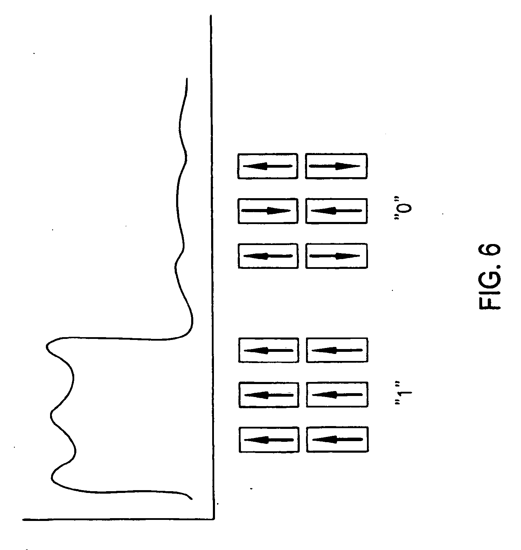

A card reader configured to integrate the magnetic fields from individual dipoles can read the data as either a "0" or a "1" depending on the overall magnetic field of the dipoles. Figure 6 shows the output signal of a card reader as a function of time or location at the self-programming region 212 of a track, showing a "1" bit and a "0" bit stored in the self-programming region 212.

Alternatively, each bit can also be encoded by a single dipole, as long as the dipole provides sufficient magnetic field strength for detection by the card reader. For example, a "1" bit can be represented by the dipole being aligned in a first direction, and a "0" bit represented by the dipole being aligned in a second (or opposite) direction.

The transaction card 200 can be configured to initiate self-programming under different conditions. In one embodiment, the processor 202, based on an embedded algorithm, generates a new code at predetermined time intervals, and sends a control signal to the power source 220, which in turn provides current to the coils for updating the data bits for the security code in the self-programming region 212. The algorithm may be based on a pseudo-random number generator, and may include the current time as a parameter for computing the verification code. In one embodiment, a new code is generated about every 30 seconds. It is understood, however, that other time intervals can also be used, and that the self-programming may or may not be done at regular intervals (i.e., the time intervals between self-programming or update may also be variable).

Alternatively, instead of computing the verification code on a real-time basis using the algorithm on the processor 202, verification codes for a relatively long time period, e.g., on the order of a few years, can be generated by a server in advance of issuing the card to the user. In this embodiment, a list of the time-dependent verification codes (corresponding to predetermined time intervals) are stored in the memory of the card 200 for retrieval by the processor 202 at future times. It is also possible to provide for uploading these verification codes to the memory on the card 200 at specific secure card programming terminals, such as those available at banks or other authorized facilities.

The current verification code may be displayed on the optional digital display 216, which may be a variety of non-volatile, low resolution and low power consumption displays that are commercially available from different sources, e.g., elnk, Fujitsu and Phillips, among others. The display may be used, for example, by the card user for manually entering the current code to a transaction device for validation purpose, instead of having the magnetic stripe 210 read by a card reader.

The optional smart card interface 208 can be used for various functions, such as providing communication between the transaction card 200 and the card reader or other devices, providing an interface to an external power source, or for re-charging the power source 220 on the transaction card 200, among others.

The dynamically updated card verification code can be used in conjunction with existing security measures such as a personal identification number (PIN) for publicly authenticating transactions without jeopardizing the security of the card. For example, to conduct a transaction using the transaction card 200, a card holder will present the card 200 to a merchant for swiping at a card reader. The data on the card, including the dynamically generated card verification code (CVC), is communicated by the card reader to a card issuer's remote server, which validates the current CVC as well as other data. Unlike other data on the card, e.g., card number, card holder's name, expiration date, and so on, the dynamically updated CVC cannot be easily duplicated by unauthorized parties. Thus, the combined use of the CVC code and the PIN, which is not stored on the card and is known only by the card holder, provides an added level of security to the transactions compared to other existing security measures.

Since the card holder does not have control over the self-programming of the CVC, it is also possible that the card may be read as the CVC is being updated. This may lead to a discrepancy between the CVC on the card and the remote server, resulting in a validation failure. Thus, one embodiment of the invention provides for temporarily disabling the start and end bit patterns (e.g., clock bits) on the track before each self-programming step, and enabling these bits after the code update. If the card is read during CVC update, the disabled start and end bit patterns will cause a read error at the card reader (as opposed to a validation failure), in which case, the card can be swiped again soon afterwards when the start and end bit patterns are enabled.

In an example serving for a better understanding, the coils 300 in the self-programming region 212 of the card 200 are configured to function as a magnetic stripe emulator, with the magnetic fields generated by the coils 300 being detected directly by a magnetic stripe card reader. In this emulator mode, the dynamic verification code is not stored on any tracks of the magnetic stripe 210. Thus, the self-programming region 212 does not have to be coupled to the magnetic stripe 210. Currents are provided from the battery 220 to the coils 300 on a continuous basis so that the data bits (represented by the magnetic fields of the coils 300) can be read by the card reader. Alternatively, in order to preserve the battery life in this emulator mode, a sensor may be provided on the card 200 to allow for manually activating the coils for generating the verification code. For example, an inductive sensor may be used to sense a touch by a finger for activating the generation of the verification code under the emulator mode.

In another example serving for a better understanding, the self-programming component is a MRAM element, or more specifically, a magnetic tunnel junction element, which is a non-volatile memory whose data states "0" and "1" can be written by passing a current through the memory cell in opposite directions. In this example, the magnetic tunnel junction elements functions independently from the magnetic stripe, and can generally be located anywhere on the transaction card 200. The data stored by the MRAM elements can be read by an appropriate reader. Details regarding MRAM fabrication and technology can be found, for example, in Ditizio et al., "Cell Shape and Patterning Considerations for Magnetic Random Access Memory (MRAM) Fabrication", Semiconductor Manufacturing Magazine, January 2004; and in Gallagher and Parkin, "Development of the magnetic tunnel junction MRAM at JBM: From first junctions to a 16-Mb MRAM demonstrator chip", IBM J. Res. & Dev., vol. 50, No. 1, pg. 5-23A, January 2006.

## Claims

1. A transaction card (200) comprising:
a processor (202);
a magnetic stripe (210);
a self-programming region (212) comprising a part of the magnetic stripe (210) and at least one self-programming component (300) operatively coupled to the part of the magnetic stripe (210); and
a power source (220) connected to the processor (202) and the at least one self-programming component (300) of the self-programming region (212),
**characterized in that** the at least one self-programming component (300) is configured for data update of a security code magnetically stored in the part of the magnetic stripe (210), and is configured for data update of the security code at predetermined time intervals.

2. The transaction card (200) according to claim 1, wherein the at least one self-programming component (300) is configured to receive an electrical current from the power source (220), the electrical current being passable through the self-programming component (300) in two directions, the at least one self-programming component (300) being configured to create a magnetic field, wherein the magnetic field has a first orientation associated with one current direction and a second orientation associated with the other current direction.

3. The transaction card (200) according to claim 2, wherein the at least one self-programming component (300) is embedded in the magnetic stripe (210).

4. The transaction card (200) of claim 3, wherein the at least one self-programming component (300) is at least one electromagnetic coil (300).

5. The transaction card (200) of claim 4, further comprising:
at least one magnetic element of the magnetic stripe (210) operatively coupled to the at least one electromagnetic coil (300) and capable of aligning in two orientations in response to the two directions of the electrical current to the at least one electromagnetic coil (300).

6. The transaction card (200) of claim 3, wherein the security code is a verification code, wherein the processor (202) comprises:
a memory containing an algorithm for computing the verification code at the predetermined time intervals.

7. The transaction card (200) of claim 6, wherein the processor (202) is configured for sending one or more signals to the power source (220) to provide an electrical current to the at least one self-programming component (300) for encoding the verification code.

## Patentansprüche

1. Transaktionskarte (200), umfassend:
Einen Prozessor (202);
einen Magnetstreifen (210);
einen selbstprogrammierenden Bereich (212), welcher einen Teil des Magnetstreifens (210) und mindestens eine wirkungsmäßig mit dem Teil des Magnetstreifens (210) gekoppelte selbstprogrammierende Komponente (300) umfasst; und
eine Leistungsquelle (220), welche mit dem Prozessor (202) und der mindestens einen selbstprogrammierenden Komponente (300) des selbstprogrammierenden Bereichs (212) verbunden ist,
**dadurch gekennzeichnet, dass** die mindestens eine selbstprogrammierende Komponente (300) dafür konfiguriert ist, die Daten eines in dem Teil des Magnetstreifens (210) magnetisch gespeicherten Sicherheitscodes zu aktualisieren, und dafür konfiguriert ist, die Daten des Sicherheitscodes in vorgegebenen Zeitintervallen zu aktualisieren.

2. Transaktionskarte (200) nach Anspruch 1, wobei die mindestens eine selbstprogrammierende Komponente (300) für den Empfang eines elektrischen Stroms von der Leistungsquelle (220) konfiguriert ist, wobei der elektrische Strom in zwei Richtungen durch die selbstprogrammierende Komponente (300) fließen kann, wobei die mindestens eine selbstprogrammierende Komponente (300) für das Erzeugen eines magnetischen Feldes konfiguriert ist, wobei das magnetische Feld eine mit der einen Stromrichtung assoziierte erste Ausrichtung und eine mit der anderen Stromrichtung assoziierte zweite Ausrichtung aufweist.

3. Transaktionskarte (200) nach Anspruch 2, wobei die mindestens eine selbstprogrammierende Komponente (300) In dem Magnetstreifen (210) eingebettet ist.

4. Transaktionskarte (200) nach Anspruch 3, wobei die mindestens eine selbstprogrammierende Komponente (300) mindestens eine elektromagnetische Spule (300) ist.

5. Transaktionskarte (200) nach Anspruch 4, weiterhin umfassend:
Mindestens ein magnetisches Element des Magnetstreifens (210), welches wirkungsmäßig mit der mindestens einen elektromagnetischen Spule (300) gekoppelt und fähig ist, sich In Reaktion auf die zwei Richtungen des elektrischen Stroms in zwei Ausrichtungen an die mindestens eine elektromagnetische Spule (300) anzupassen.

6. Transaktionskarte (200) nach Anspruch 3, wobei der Sicherheitscode ein Prüfcode ist, wobei der Prozessor (202) umfasst:
Einen Speicher mit einem Algorithmus für die Berechnung des Prüfcodes in den vorgegebenen Zeitintervallen.

7. Transaktionskarte (200) nach Anspruch 6, wobei der Prozessor (202) für das Senden eines oder mehrerer Signale an die Leistungsquelle (220) konfiguriert ist, um die mindestens eine selbstprogrammierende Komponente (300) für das Codieren des Prüfcodes mit Strom zu versorgen.

## Revendications

1. Carte de transaction (200) comprenant :
un processeur (202) ;
une bande magnétique (210) ;
une zone d'auto-programmation (212) comprenant une partie de la bande magnétique (210) et au moins un composant d'auto-programmation (300) couplé de manière opérationnelle à la partie de la bande magnétique (210) ; et
une source d'alimentation (220) connectée au processeur (202) et à l'au moins un composant d'auto-programmation (300) de la zone d'auto-programmation (212),
**caractérisée en ce que** l'au moins un composant d'auto-programmation (300) est configuré pour une mise à jour des données d'un code de sécurité mémorisé magnétiquement dans la partie de la bande magnétique (210), et pour une mise à jour des données du code de sécurité à des intervalles de temps prédéterminés.

2. Carte de transaction (200) selon la revendication 1, selon laquelle l'au moins un composant d'auto-programmation (300) est configuré pour recevoir un courant électrique depuis la source d'alimentation (220), le courant électrique pouvant passer à travers le composant d'auto-programmation (300) dans deux sens, l'au moins un composant d'auto-programmation (300) étant configuré pour créer un champ magnétique, selon laquelle le champ magnétique a une première orientation associée à un sens du courant et une seconde orientation associée à l'autre sens du courant.

3. Carte de transaction (200) selon la revendication 2, selon laquelle l'au moins un composant d'auto-programmation (300) est intégré dans la bande magnétique (210).

4. Carte de transaction (200) selon la revendication 3, selon laquelle l'au moins un composant d'auto-programmation (300) est au moins une bobine électromagnétique (300).

5. Carte de transaction (200) selon la revendication 4, comprenant en outre :
au moins un élément magnétique de la bande magnétique (210) couplé de manière opérationnelle à l'au moins une bobine électromagnétique (300) et pouvant s'aligner dans deux orientations en réponse aux deux directions du courant électrique vers l'au moins une bobine électromagnétique (300).

6. Carte de transaction (200) selon la revendication 3, selon laquelle le code de sécurité est un code de vérification, selon laquelle le processeur (202) comprend :
une mémoire contenant un algorithme pour calculer le code de vérification à des intervalles de temps prédéterminés.

7. Carte de transaction (200) selon la revendication 6, selon laquelle le processeur (202) est configuré pour envoyer un ou plusieurs signaux à la source d'alimentation (220) pour fournir un courant électrique à l'au moins un composant d'auto-programmation (300) pour coder le code de vérification à des intervalles de temps prédéterminés.
